# EUROPÄISCHE PATENTSCHRIFT

(11) **EP 1 387 449 B1**
(45) Veröffentlichungstag und Bekanntmachung des Hinweises auf die Patenterteilung: **27.04.2005**
(21) Anmeldenummer: 02405636.8
(22) Anmeldetag: 22.07.2002
(51) Int. Cl.: H01R 43/28, B65H 61/00, G02B 6/44

(54) **Vorrichtung und Verfahren zum Wickeln von kabelförmigem Material**
Apparatus and method for coiling of cable material
Appareil et méthode pour enrouler des câbles

(43) Veröffentlichungstag der Anmeldung: 04.02.2004
(73) Patentinhaber: Komax Holding AG, 6036 Dierikon (CH)
(72) Erfinder: Frommenwiler, Franz, 6023 Rothenburg (CH)
(74) Vertreter: EGLI-EUROPEAN PATENT ATTORNEYS

(56) Entgegenhaltungen:
- DE-A- 3 343 286
- DE-A- 3 443 754
- DE-A- 4 235 007
- FR-A- 2 362 070
- FR-A- 2 678 135
- US-A- 5 427 327
- US-A- 6 135 164

## Beschreibung

Die vorliegende Erfindung betrifft eine Vorrichtung zum Wickeln und Abbinden von kabelförmigen Leitermaterialien, z.B. von Lichtwellenleitern. Weiterhin betrifft die Erfindung ein Verfahren zum Wickeln und Abbinden von solchen Materialien.

Bekannterweise erfolgt die Lagerung, der Versand und ein erheblicher Teil der Be- und Verarbeitung von kabelförmigem Leitermaterial in Spulenform. Dabei ist das Aufspulen und Ablängen des Materials ein mit erheblichem Aufwand verbundener Prozess, der grosse Genauigkeitsanforderungen mit sich bringt, wenn der nachfolgende Bearbeitungsprozess in hohem Masse automatisiert stattfinden soll. Grundsätzlich ist aber ein solches Verfahren und die dazugehörige Vorrichtung bereits bekannt, z.B. aus der DE 42 35 007 A1. Dort wird ein Verfahren vorgeschlagen, bei dem das Wickelmaterial in einem trommelförmigen Hohlraum einer nicht umlaufenden Wickelvorrichtung eingespeist wird, wobei es sich in aufeinanderfolgenden Schleifen oder Lagen entlang der inneren Umfangsfläche des Wickelhohlraumes ablegen soll. Für strapazierfähiges Kabelmaterial, insbesondere für elektrische Leitungen und Litzen mag ein solches Verfahren durchaus einsetzbar sein. Wenn aber an das Material spezielle Forderungen gestellt werden wie z.B. die garantierte Sicherstellung, dass das kabelförmige Material in keinem Stadium des Verarbeitungsprozesses einen bestimmten Krümmungsradius unterschreiten darf, dann ist ein solches Verfahren wie aus der DE 42 35 007 A1 bekannt, nicht geeignet, wie sich dort z.B. aus der Figur 3 unschwer erkennen lässt, da das eingeschobene Kabelmaterial vor dem Ablegen mehr oder weniger unkontrolliert gebogen wird.

Eine dem vorstehend beschriebenen Problem entsprechende Leiterart ist der Lichtwellenleiter, der beim Unterschreiten eines vorgegebenen Krümmungsradius beschädigt wird.

FR-A-2 362 070 offenbart eine Wickelvorrichtung und Wickelverfahren für Kabel. Hierbei wird eine Kabellänge durch einen hin- und herlaufenden Kabelführer von einer Trommel abgewickelt und bei gleichzeitiger Messung der Wickellänge auf einen Wickelkern aufgewickelt. Die Messvorrichtung steuert ein Messer um nach einer bestimmten Wickellänge das Kabel abzulängen. Das eine Ende des Kabel wird durch eine mit dem Wickelkern umlaufende Klemmvorrichtung festgehalten. Eine Abstreifflansch erlaubt es, die fertige Wicklung vom Wickelkern herunterzunehmen. Beide Kabelenden bleiben frei ausserhalb der Wicklung, so dass sie weiterverarbeitet werden können. FR2362070 gibt jedoch keinerlei Auskunft wie zu verfahren ist, wenn auch Ein- und Ausgangslängen des vorliegenden Kabels mit spezifischen Längen gefertigt werden müssen.

Andererseits ist es aber beim Wickelvorgang ebenso wichtig, dass die beiden Enden des aufgewickelten Materials eine ganz bestimmte Länge aufweisen. Zumeist kommt es dabei insbesondere darauf an, dass die Längen bis auf einen Betrag von ca. 0,1 mm gleich sind, während sich die absoluten Längen der Enden aus der Gesamtlänge des Stückes des kabelförmigen Leitermaterials (vorgegeben) sowie dem Radius der Wicklung ergeben.

Es ist also die Aufgabe der vorliegenden Erfindung, eine Vorrichtung und ein Verfahren vorzuschlagen, bei dem das Leitermaterial mit grosser Ablänggenauigkeit und gegebenenfalls mit sehr grosser Endengleichheit aufgewickelt werden kann, ohne dass ein bestimmter minimaler Krümmungsradius, der durchaus in der Grössenordnung des Wickelradius liegen kann, unterschritten wird.

Die Erfindung löst die Aufgabe durch eine Vorrichtung nach Anspruch 1. Dabei haben die Massnahmen der Erfindung zunächst einmal zur Folge, dass einerseits bei jedem Schritt des Wickelprozesses ein bestimmter Krümmungsradius des Wickelgutes gewährleistet werden kann, dass das Wickelgut nur ganz bestimmten Belastungen ausgesetzt ist und dass das Endprodukt, nämlich der aufgewickelte Leiter, zwei Enden mit hoher Abläng- und Wickelgenauigkeit, vorzugsweise gleichen Endlängen in hoher Genauigkeit aufweisen.

Besonders vorteilhaft ist ein Verfahren nach Anspruch 7, bei dem - entsprechend dem Vorrichtungsanspruch 1 - ein Verfahren zum Wickeln von entsprechendem Kabelmaterial vorgeschlagen wird.

Weitere vorteilhafte Einzelheiten der Erfindung sind in den abhängigen Ansprüchen dargelegt. Dabei sind die Massnahmen an der Wickeleinrichtung - wie in den Ansprüchen 2 bis 6 definiert - besonders vorteilhaft.

Die vorgenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weiterhin ist die Vorrichtung nicht auf Lichtwellenleiter beschränkt. Sowohl die Vorrichtung als auch das Verfahren lassen sich für andere kabelförmige Leiter, wie z.B. Koaxialkabel etc. verwenden. Dies wird insbesondere dann vorteilhaft sein, wenn das Material ebenfalls nicht stärker als ein vorgegebener Krümmungsradius gebogen werden soll.

Weitere Einzelheiten, Merkmale und Vorteile des Gegenstandes der Erfindung ergeben sich aus der nachfolgenden Beschreibung der dazugehörigen Zeichnungen, in denen - beispielhaft - eine Vorrichtung und ein dazugehöriger Verfahrensablauf zur vorliegenden Erfindung erläutert wird.

In den Zeichnungen zeigen:
- Fig. 1: eine Übersichtsdarstellung der erfindungsgemässen Vorrichtung mit einer - nicht unbedingt zur Erfindung gehörenden - Zuführeinrichtung für Lichtwellenleiter; in dieser Figur ist zudem die Übergabe des vorderen Endes des Lichtwellenleiters an eine erste Greifereinrichtung dargestellt;
- Fig. 2: eine weitere Darstellung der erfindungsgemässen Vorrichtung gemäss Figur 1; in dieser Figur ist zudem die Übergabe des vorderen Endes des Lichtwellenleiters an den Wickelgreifer dargestellt;
- Fig. 3: eine weitere Darstellung der erfindungsgemässen Vorrichtung gemäss Figur 1 und 2; in dieser Figur ist zudem der Wickelbetrieb dargestellt;
- Fig. 4: eine weitere Darstellung der erfindungsgemässen Vorrichtung gemäss Figur 1; in dieser Figur ist zudem das Ablängen und die Übergabe des hinteren Endes des Lichtwellenleiters an die erste Greifeinrichtung und die Übergabe des vorderen Endes des Lichtwellenleiters an eine zweite Greifeinrichtung dargestellt;
- Fig. 5: eine weitere Darstellung der erfindungsgemässen Vorrichtung gemäss Figur 1; in dieser Figur ist zudem der Prozess des Nivellierens der beiden Enden des Lichtwellenleiters dargestellt;
- Fig. 6: eine Komponentendarstellung der Wickeleinheit der erfindungsgemässen Vorrichtung mit der ersten und der zweiten Greifeinrichtung (Schleppgreifer und Nivelliergreifer);

- Fig. 7: eine Detaildarstellung der Wickeleinheit nach Figur 6;
- Fig. 8: eine Detaildarstellung der Greifer nach Figur 6 (Schleppgreifer und Nivelliergreifer) ;
- Fig. 9: eine Detaildarstellung des Wickeltopfes nach Figur 6 mit Führungsblech und Entspannungseinrichtung;
- Fig. 10: eine Übersichtszeichnung der Vorrichtung nach Figur 1, in der jedoch noch weitere Komponenten enthalten sind; Detaildarstellung des Wickeltopfes nach Figur 6 mit Führungsblech und Entspannungseinrichtung und
- Fig. 11: eine Darstellung einer Transfereinrichtung zur Weiterreichung der fertig gewickelten Spule mit nivellierten Enden.

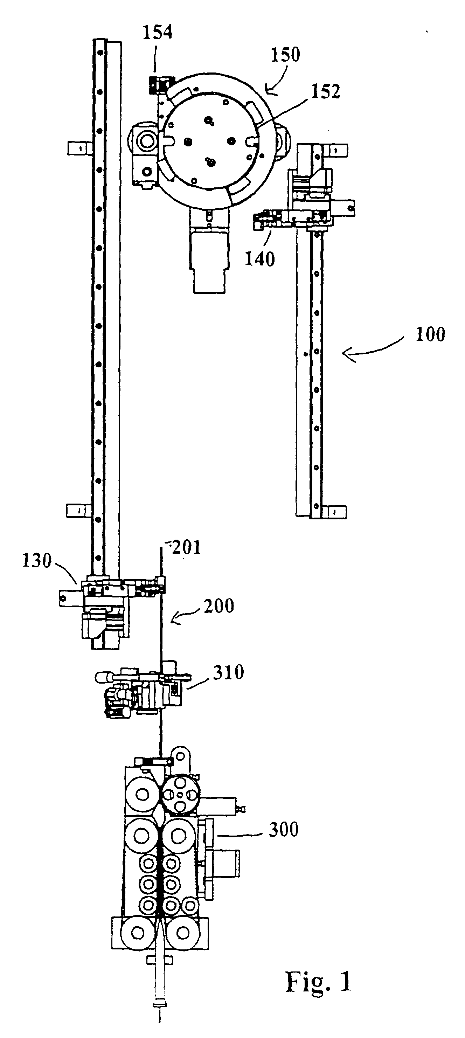

In der in den Figuren 1 bis 5 als Ganzes mit 100 bezeichneten Vorrichtung zum Wickeln und Nivellieren eines Leiters wird von einer Leitervorschubeinrichtung 300 mit dem zu bearbeitenden Leitermaterial 200 gespeist. In diesem - nicht zeichnerisch dargestellten - Initialisierungszustand ist der Schleppgreifer 130 offen und eingefahren. Er befindet sich am Leitungsanfang, also in der Nähe der Leitervorschubeinrichtung 300. Der Nivelliergreifer 140 ist ebenfalls offen und befindet sich in der Nähe der Wickeleinrichtung 150. Der Wickeltopf 152 befindet sich in Grundposition, das Wickeltopfventil ist ausgeschaltet.

Der Schleppgreifer 130 greift, wie in Figur 1 dargestellt, sodann das Leitermaterial 200 ca. 10 mm hinter dem vorderen Leitungsende 201, nachdem die Leitervorschubeinrichtung 300 dieses vordere Leitungsende 201 um ca. 90 mm vorgeschoben hat. (A)

Der Schleppgreifer 130 wird auf eine konstante Zugkraft geschaltet, im hier beschriebenen Ausführungsbeispiel auf eine Zugkraft von ca. 30 N. Dann wird die Leitung 200 durch die Leitervorschubeinrichtung 300 - im Ausführungsbeispiel um ca. 850 mm - vorgeschoben, wobei der Schleppgreifer 130 nicht den eigentlichen Vorschub, sondern nur den Abtransport des vorgeschobenen Leitermaterials 200 besorgt. (B)

Nach ca. 200 mm Fahrweg wird der Schleppgreifer 130 um ca. 80 mm nach aussen bewegt, um nicht mit dem Wickeltopfgreifer 154 störend zu interferieren. Dadurch wird ein lateraler Abstand zwischen dem Schleppgreifer 130 und dem Wickeltopfgreifer 154 eingehalten. Dieses Verschieben wird im vorliegenden Ausführungsbeispiel durch ein Ventil - "Ventil ein" - gesteuert. Alternativ kann aber auch die Übergabe des vorderen Endes 201 vor dem Wickeltopf durchgeführt werden, so dass die Vermeidung der Interferenz durch das Einhalten eines longitudinaler Abstand eingehalten wird. Weiterhin alternativ kann vorgeschlagen werden, den Schleppgreifer 130 nach oben zu bewegen, um so einen vertikalen Abstand zum Wickeltopfgreifer 154 einzuhalten. Sobald der Schleppgreifer 130 den Wickeltopfgreifer 154 passiert hat, wird der Schleppgreifer wieder in die alte Linie verfahren - "Ventil aus".

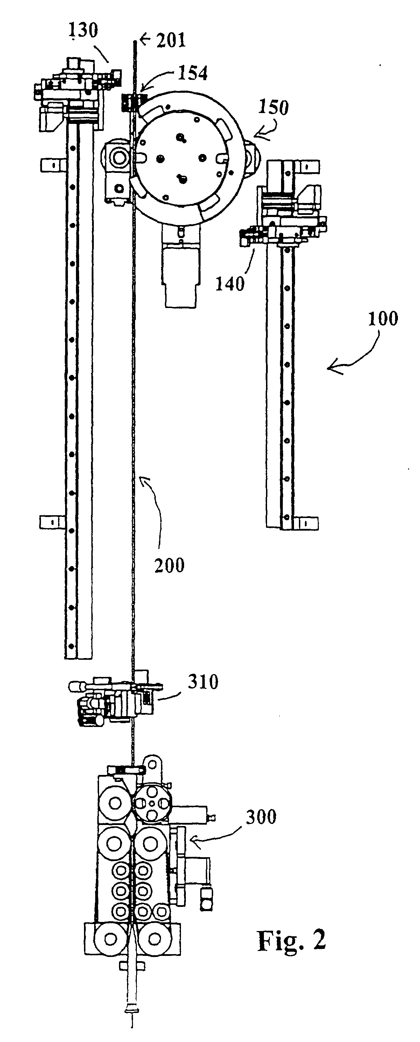

Nunmehr wird das vordere Leitungsende 201 an den Wickeltopfgreifer 154 übergeben, wie in Figur 2 dargestellt, das heisst, dass der Wickeltopfgreifer 154 die Leitung greift und der Schleppgreifer 130 die Leitung freigibt. Der Wickeltopfgreifer 154 schliesst nach ca. 100 ms. In dieser Zeit fördert die Leitervorschubeinrichtung 300 nicht. (C)

Der Wickeltopfgreifer 154 beginnt nunmehr mit einer konstanten Zugkraft - im Ausführungsbeispiel wiederum 30 N - die Leitung auf dem Wickeltopf 152 aufzuwickeln, wobei der Wickeltopfgreifer 154 wiederum nicht den eigentlichen Vorschub, sondern nur den Abtransport des vorgeschobenen Leitermaterials 200 besorgt. Dieser Vorgang ist eigentlich nicht limitiert. Die zu wickelnde Länge ist frei einstellbar, im Ausführungsbeispiel von ca. 1500 mm bis ca. 10000 mm, wobei dieser Bereich durch kleinere Abmessungsänderungen selbstverständlich auch erweitert werden kann. Die Geschwindigkeit des Leitungsvorschubes ist in der hier beschriebenen Vorrichtung einstellbar von 1 m/s bis ca. 5 m/s, während die Beschleunigung im Bereich von 5 m/s² bis ca. 15 m/s², wobei auch diese Bereiche durch kleinere Änderungen selbstverständlich erweitert werden können. Während dieser Zeit wird der Schleppgreifer 130 wieder in die Ausgangsposition zurückbewegt. (D)

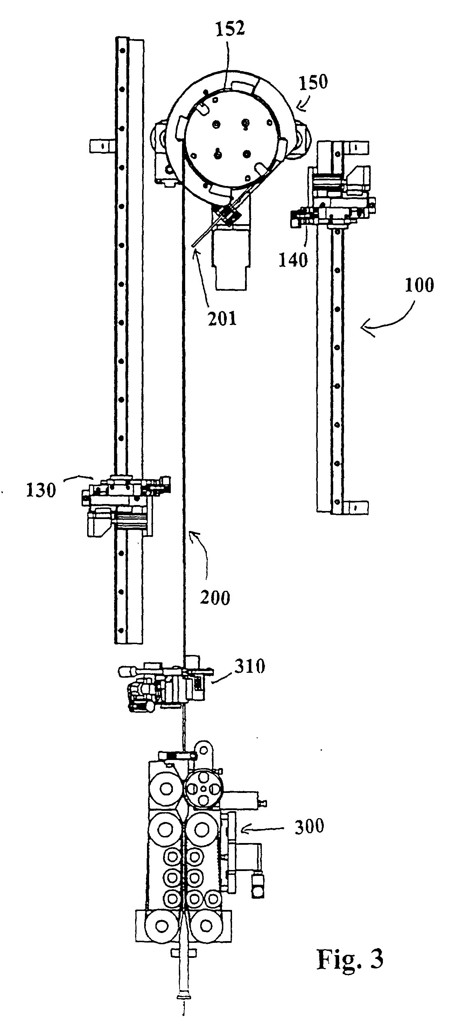

Wenn die Leiterlänge den vorgesehenen Betrag erreicht hat, wie in Figur 3 dargestellt, dann wird die Leitungsvorschubeinrichtung 300 gestoppt und der Leiter 200 vom Schleppgreifer 130 gegriffen. (E)

Die Leitung wird mit Hilfe der Trenneinrichtung 310 getrennt, wiederum so, dass das hintere Leiterende 202 ca. 10 mm vom Greifpunkt des Schleppgreifers 130 entfernt ist. (F)

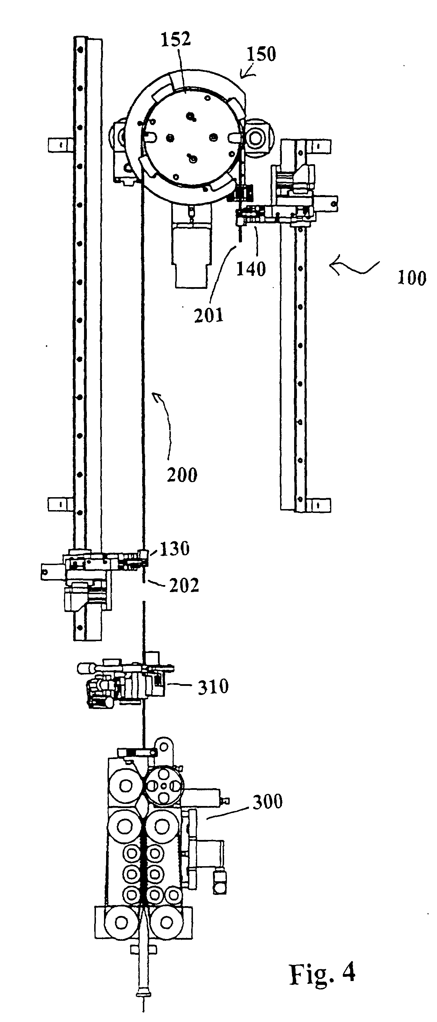

Auf den Schleppgreifer 130 wird eine konstante Zugkraft aufgeschaltet, im vorliegenden Ausführungsbeispiel beträgt die Zugkraft 20 N. Der Wickeltopf 152 wird gedreht, bis der Wickeltopfgreifer 154 eine Übergabeposition zum Nivelliergreifer 140 einnimmt, wie in Figur 4 dargestellt. (G)

Der Nivelliergreifer 140 wird geschlossen und der Wickeltopfgreifer geöffnet. (H)

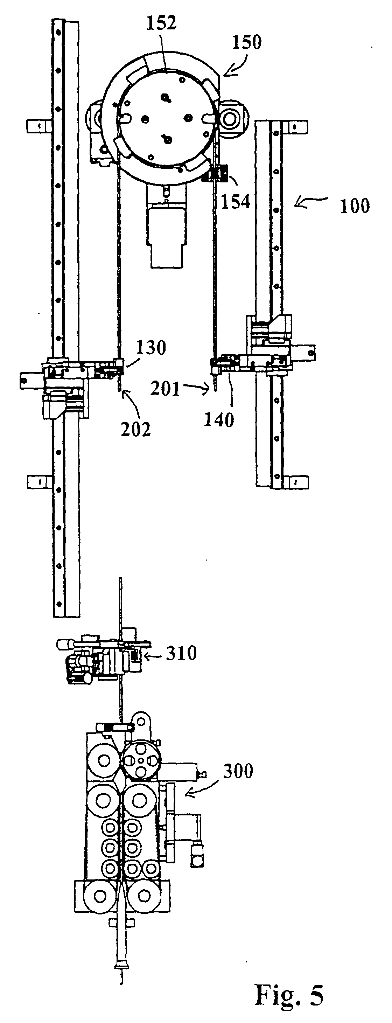

Dem Schleppgreifer 130 und dem Nivelliergreifer 140 wird jeweils eine konstante Zugkraft aufgeschaltet, im vorliegenden Ausführungsbeispiel ist die Zugkraft ungleich und beträgt 15 N bzw. 25 N. Der Wickeltopf 152 wird gedreht, wie in Figur 5 dargestellt, bis die Leiterenden 201 und 202 die gleiche Position erreicht haben. Dieser Zustand wird berechnet aus der Position von Schleppgreifer 130 und Nivelliergreifer 140 sowie dem jeweiligen Leitungsüberstand - im vorliegenden Ausführungsbeispiel also jeweils 10 mm. (I)

Die Wickeltopfwand wird entspannt, indem das Ventil eingeschaltet wird. (J)

Dann wird der Wickeltopf in die Wickelentnahmeposition gedreht. (K)

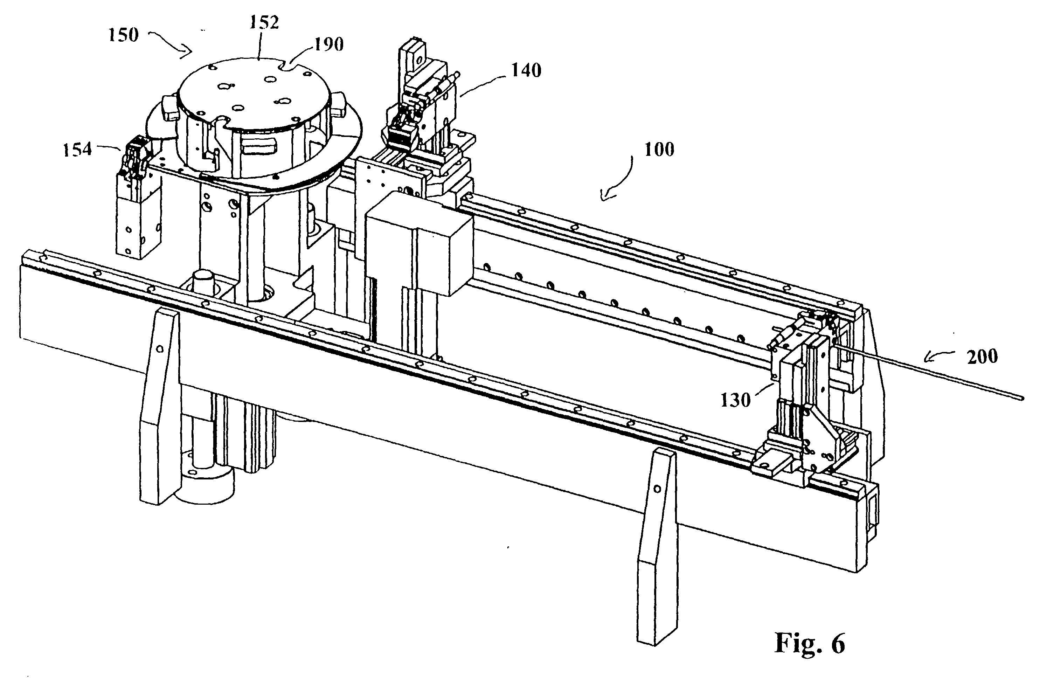

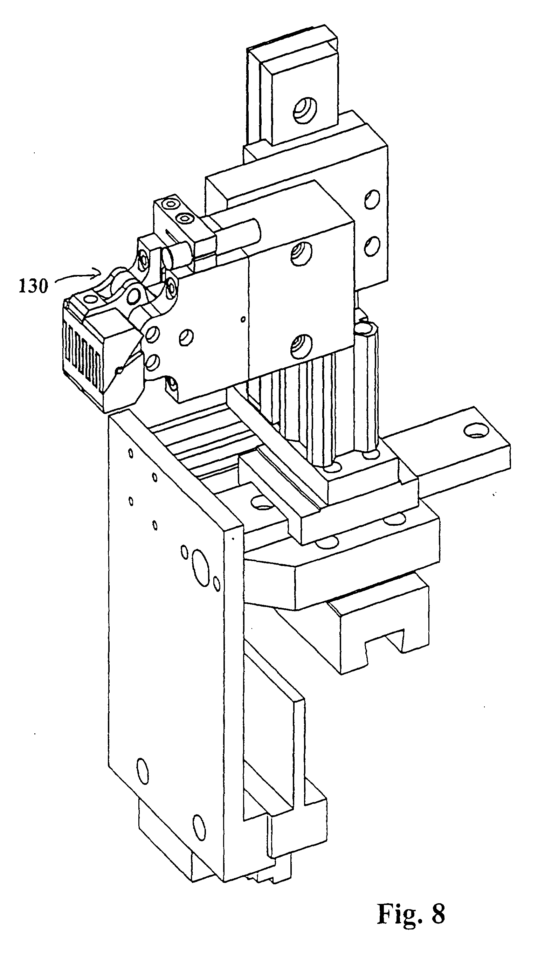

In Figur 6 ist die Wickeleinheit 150 mit dem Schleppgreifer 130 und dem Nivelliergreifer 140 detailliert dargestellt. Schleppgreifer 130 und Nivelliergreifer 140 (Figur 8) sind so eingerichtet, dass sie in beide Richtungen mit einer konstanten Zugkraft bewegt werden. Sie sorgen also nicht selbst für den Vorschub des Leiters 200, sondern nur für den geregelten und straff geführten Abtransport. Weiterhin sind sie so eingerichtet, dass ihre Position zu jedem Zeitpunkt einer - in den Figuren nicht aufgezeigte - Steuerungseinheit ihre Position zu jedem Zeitpunkt kennt. Im vorgestellten Ausführungsbeispiel wird dies durch Linearmotoren realisiert. Beide Greifer 130 und 140 haben eine äussere Ruheposition und eine innere Greifposition. In der Ruheposition sind sie also so eingerichtet, dass sie das in der Vorrichtung befindliche Leitermaterial 200 nicht stören, z.B. beim Zurückbewegen des Schleppgreifers vom Wickeltopf 152 weg bzw. des Nivelliergreifers zum Wickeltopf hin.

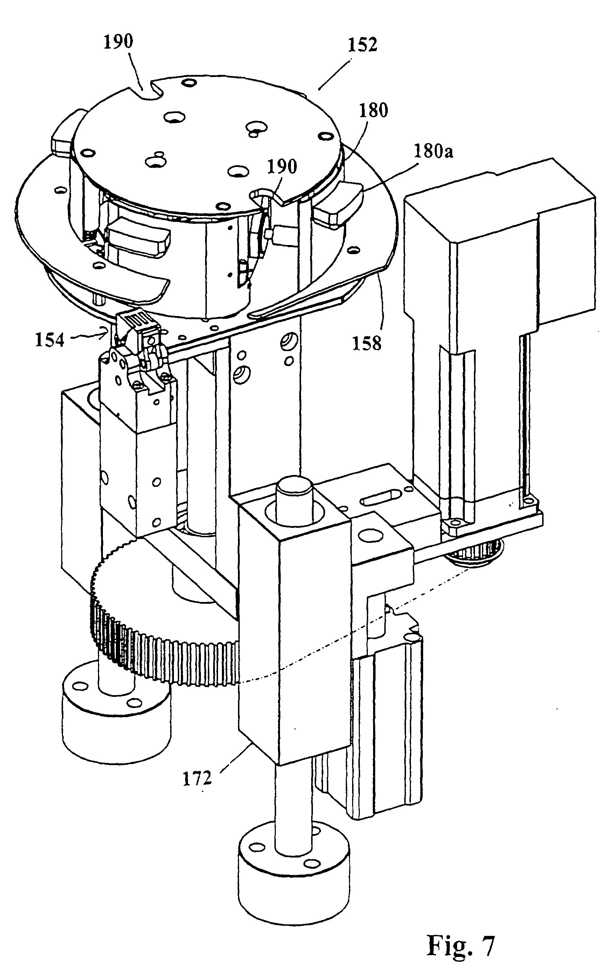

Die in Figur 7 detailliert dargestellte Wickeleinrichtung 150 umfasst in erster Linie einen durch eine Antriebseinrichtung 170 angetriebenen Wickeltopf 152 und den Wickelgreifer 154 mit einer - zumindest während des Wickelvorganges - festen azimutalen Beziehung zum Wickeltopf 152. Auch dieser Mechanismus ist so realisiert, dass er nicht selbst für den Vorschub des Leiters 200 sorgt, sondern nur für den geregelten und straff geführten Abtransport, also dem Wickelvorgang. Weiterhin ist er ebenfalls so eingerichtet, dass die - in diesem Falle azimutale - Position zu jedem Zeitpunkt der genannten - und in den Figuren nicht aufgezeigten - Steuerungseinheit bekannt ist.

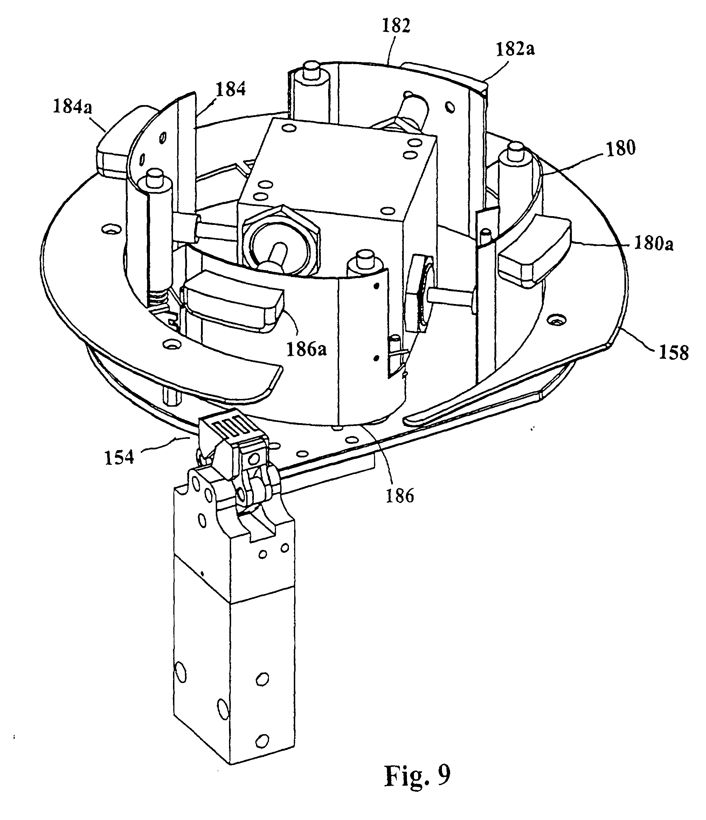

Die Wickeleinrichtung 150 ist durch eine Absenk- und Hebeeinrichtung 172 in ihrer Höhe verstellbar. In ihrem normalen Funktionszustand befindet sich die Wickeleinrichtung in einer oberen Position, in der das aufzuwickelnde Leitermaterial auf den Wickeltopf 152 aufgewickelt wird. Eine untere Position ist für den Fall vorgesehen, dass die Vorrichtung nicht zum Wickeln verwendet wird, sondern - dies macht sie vielseitig - zum Verwenden des Schleppgreifers 130, z.B. für Kabelstücke, bei denen der Krümmungsradius keine erhebliche Rolle spielt. Der Wickeltopf 152 ist durch die vier horizontal klappbar veränderlichen Elemente 180, 182, 184 und 186 so eingerichtet, dass im ausgeklappten Zustand dieser Elementen 180, 182, 184 und 186 der Wickelvorgang durchgeführt wird, während im eingeklappten Zustand das aufgewickelte Leitermaterial entspannt und nach oben frei wird. Dies ist aus Figur 9 ersichtlich. Der Antrieb des Klappmechanismus ist im vorliegenden Ausführungsbeispiel pneumatisch.

Unter der eigentlichen Wickelebene der Wickeleinrichtung 150 ist ein spiralförmig ausgebildetes Führungsblech 158 mit einer azimutalen Länge von ca. 300° angeordnet, das dafür sorgen soll, dass der Wickeltopfgreifer 154 nicht mit dem bereits auf dem Wickeltopf aufgewickelten Leitermaterial 200 interferiert. Oberhalb des Führungsbleches sind an den horizontal klappbar veränderlichen Elemente 180, 182, 184 und 186 Sicherungselemente 180a, 182a, 184a und 186a angeordnet, die verhindern, dass das aufgewickelte Leitermaterial nach oben verrutschen kann.

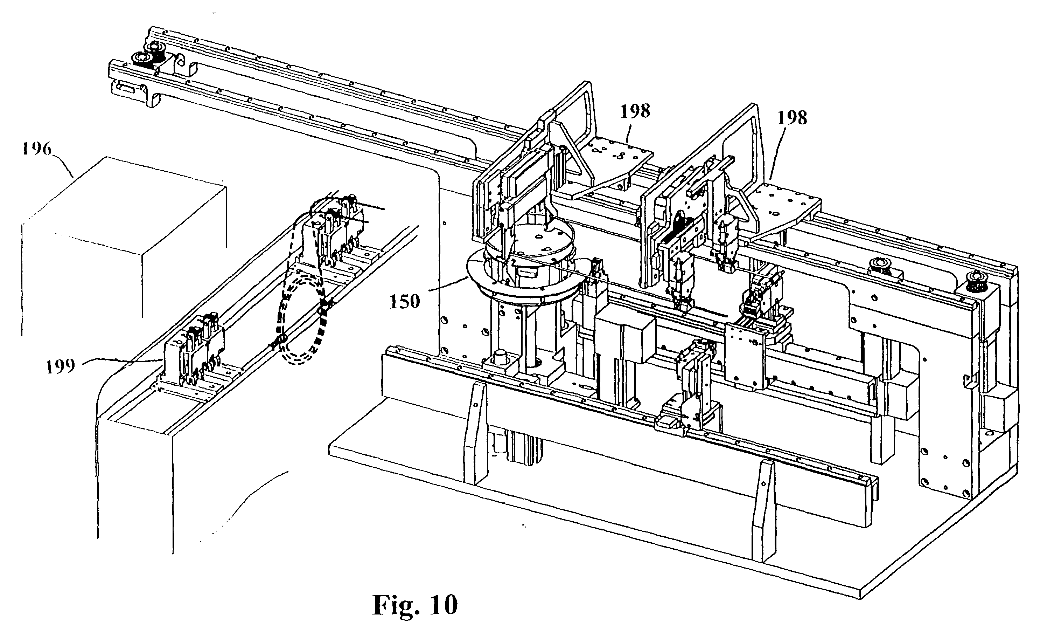

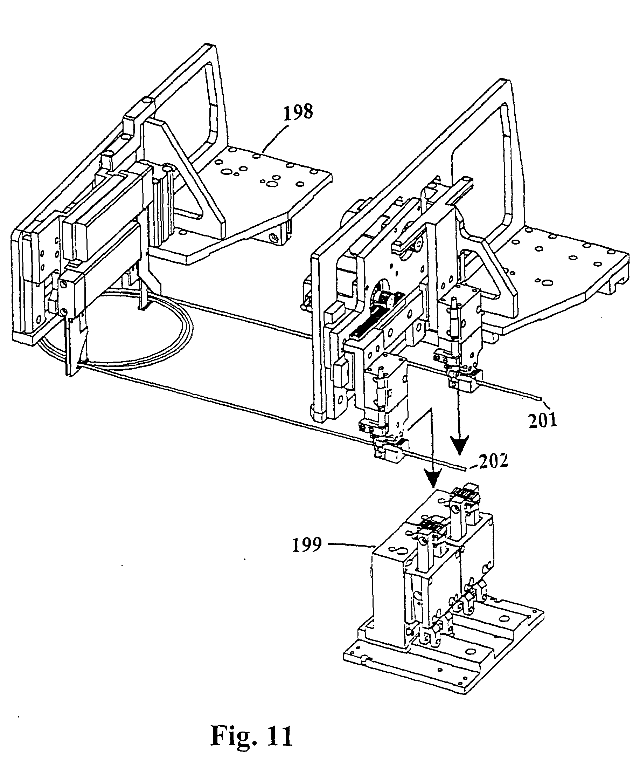

Der obere Bereich der Wickeleinrichtung weist zwei gegenüberliegende Ausnehmungen 190 und 192 auf. Diese haben den Zweck, dass die fertige Spule durch die Einheit 198 gegriffen und angehoben werden kann, um dann weiter transportiert zu werden, wie in Figur 10 dargestellt ist. Diese Einheit 198 hat im vorliegenden Ausführungsbeispiel auch noch die Funktion, diesen Wickel zu einer Abbindeeinheit 196 zu transferieren. Die Spule wird dann an den Transferwagen 199 eines Montagesystems zur Weiterbearbeitung übergeben (Figur 11) .

Der Wickeltopfgreifer 154 entspricht in seinem Aufbau und seiner Funktion im Wesentlichen dem Schleppgreifer 130 und dem Nivelliergreifer 140. Allerdings ist der Wickeltopfgreifer 154 so mit der Wickeleinrichtung 150 verbunden, dass sein Schleppvorgang azimutal ist und er somit das Material auf dem Wickeltopf 152 aufwickelt. Die in beide Richtungen drehbare Wickeleinrichtung ist mit einer Steuereinrichtung so verbunden, dass dort die azimutale Position z.B. des Wickelgreifers zu jedem Zeitpunkt bekannt ist.

## Patentansprüche

1. Vorrichtung (100) zum Wickeln eines kabelförmigen Materials (200) mit
- einer Wickeleinrichtung (150), auf der das kabelförmige Material aufgewickelt werden kann,
- einer ersten Greifeinrichtung (130) zum linearen Vorschub des vorderen Endes des kabelförmigen Materials (200) und zur Übergabe an die Wickeleinrichtung (150), **dadurch gekennzeichnet, daß** eine zweite Greifeinrichtung (140) vorhanden ist
- zur Übernahme des genannten vorderen Endes des kabelförmigen Materials von der Wickeleinrichtung (150) und zur linearen Bewegung dieses vorderen Endes von der Wickeleinrichtung (150) weg, wobei
- die genannte erste Greifeinrichtung (130) dafür eingerichtet ist, das hintere Ende des kabelförmigen Materials (200) zu greifen und im Zusammenspiel mit der zweiten Greifeinrichtung auf eine vorbestimmte Differenz der Enden zu nivellieren.

2. Vorrichtung nach Anspruch 1, **dadurch gekennzeichnet, dass** die Wickeleinrichtung (150) einen Wickelgreifer (154) aufweist, der so eingerichtet ist, dass mit ihm der Wickelvorgang auf einem Wickeltopf (152) durchgeführt werden kann.

3. Vorrichtung nach Anspruch 1 oder 2, **dadurch gekennzeichnet, dass** die Wickeleinrichtung (150) Mittel (180, 182, 184, 186) aufweist, mit dem die Wicklung festgeklemmt und gelöst werden kann.

4. Vorrichtung nach Anspruch 3, **dadurch gekennzeichnet, dass** die Mittel (180, 182, 184, 186), mit dem die Wicklung festgeklemmt und gelöst werden kann, Sicherungsmittel (180a, 182a, 184a, 186a) aufweisen, die bewirken, dass die Wicklung nach oben begrenzt wird.

5. Vorrichtung nach einem der vorstehenden Ansprüche, **gekennzeichnet durch** ein Führungsmittel (158) zur vertikalen Führung der Wicklung auf der Wickeleinrichtung (150) und zur Vermeidung von Störungen der Wicklung **durch** den Wickeltopfgreifer (154).

6. Vorrichtung nach einem der vorstehenden Ansprüche, **dadurch gekennzeichnet, dass** der obere Bereich der Wickeleinrichtung (150) zwei gegenüberliegende Ausnehmungen (190, 192) zum Abbinden und Weitertransport der gewickelten Spule aufweist.

7. Verfahren zum Wickeln eines kabelförmigen Leitermaterials (200) mit
- einer Wickeleinrichtung (150), auf der das kabelförmige. Leitermaterial aufgewickelt werden kann, mit einem Wickeltopfgreifer (154),
- einer ersten Greifeinrichtung (130) zum linearen Vorschub des vorderen Endes (201) des kabelförmigen Leitermaterials (200) und zur Übergabe an die Wickeleinrichtung (150),
- einer zweiten Greifeinrichtung (140) zur Übernahme des genannten vorderen Endes (201) des kabelförmigen Leitermaterials von der Wickeleinrichtung (150) und zur linearen Bewegung dieses vorderen Endes von der Wickeleinrichtung (150) weg, mit den Schritten
- (A) Übergabe des vorderen Endes (201) des kabelförmigen Materials an die erste Greifereinrichtung (130),
- (B) Vorschub des vorderen Endes (201) des kabelförmigen Leitermaterials (200) und Führung durch die erste Greifeinrichtung (130),
- (C) Übergabe des vorderen Endes (201) des kabelförmigen Materials an den Wickeltopfgreifer (154);
- (D) Wickeln des kabelförmigen Leitermaterials (200) auf der Wickeleinrichtung (150),
- (E) Übergabe des hinteren Endes (202) des kabelförmigen Leitermaterials (200) an die erste Greifeinrichtung (130),
- (F) Ablängen des kabelförmigen Leitermaterials (200),
- (H) Übergabe des vorderen Endes (201) des kabelförmigen Leitermaterials an die zweite Greifeinrichtung (140),
- (I) Nivellieren der beiden Enden (201, 202) des kabelförmigen Leitermaterials (200) durch eine Ausrichtung der ersten Greifereinrichtung (130) mit der zweiten Greifereinrichtung (140),
- (J) Entspannen der Wicklung auf der Wickeleinrichtung (150, 152).

8. Verfahren nach Anspruch 7, **gekennzeichnet durch** den zusätzlichen Schritt, den Wickeltopf nach dem Entspannen (J) in eine Wickelentnahmeposition zu drehen.

9. Verfahren nach Anspruch 7 oder 8, **gekennzeichnet durch** den zusätzlichen Schritt, nach dem Ablängen (F) des kabelförmigen Leitermaterials (200) den Wickeltopf (152) zu drehen, bis der Wickeltopfgreifer (154) eine Übergabeposition zur zweiten Greifereinrichtung (140) einnimmt.

10. Verfahren nach einem der Ansprüche 7 bis 9, **dadurch gekennzeichnet, dass** die erste Greifereinrichtung (130) für einen bestimmten Teil des Fahrweges aus der Längsrichtung herausbewegt wird, um eine störende Interferenz mit dem Wickeltopfgreifer (154) zu vermeiden und wieder in die ursprüngliche Fahrlinie hereinbewegt wird, nachdem die erste Greifereinrichtung (130) den Wickeltopfgreifer (154) passiert hat.

## Claims

1. An apparatus (100) for winding a cable-like material (200), having
- a winding arrangement (150), on which the cable-like material can be wound up,
- a first gripping arrangement (130), for linearly advancing the leading end of the cable-like material (200) and for transferring the same to the winding arrangement (150),
- a second gripping arrangement (140), for receiving the abovementioned leading end of the cable-like material from the winding arrangement (150) and for moving this leading end linearly away from the winding arrangement (150), it being the case that
- the abovementioned first gripping arrangement (130) is set up for gripping the trailing end of the cable-like material (200) and, in conjunction with the second gripping arrangement, evening it out to a predetermined difference between the ends.

2. The apparatus as claimed in claim 1, wherein the winding arrangement (150) has a coil gripper (154) which is set up such that, with it, it is possible for the winding operation to be carried out on a winding container (152).

3. The apparatus as claimed in claim 1 or 2, wherein the winding arrangement (150) has means (180, 182, 184, 186) which allows the coil to be clamped firmly and released.

4. The apparatus as claimed in claim 3, wherein the means (180, 182, 184, 186) which allows the coil to be clamped firmly and released have securing means (180a, 182a, 184a, 186a) which has the effect of bounding the coil in the upward direction.

5. The apparatus as claimed in one of the preceding claims, which comprises a guide means (158) for guiding the coil vertically on the winding arrangement (150) and for avoiding the situation where the coil is disturbed by the winding-container gripper (154).

6. The apparatus as claimed in one of the preceding claims, wherein the top region of the winding arrangement (150) has two mutually opposite recesses (190, 192) for tying off the wound reel and transporting it further.

7. A process for winding a cable-like conductor material (200), having
- a winding arrangement (150), on which the cable-like conductor material can be wound up and having a winding-container gripper (154),
- a first gripping arrangement (130), for linearly advancing the leading end (201) of the cable-like conductor material (200) and for transferring the same to the winding arrangement (150),
- a second gripping arrangement (140), for receiving the abovementioned leading end (201) of the cable-like conductor material from the winding arrangement (150) and for moving this leading end linearly away from the winding arrangement (150), comprising the following steps
- (A) transferring the leading end (201) of the cable-like material to the first gripper arrangement (130),
- (B) advancing the leading end (201) of the cable-like conductor material (200) and guiding it by way of the first gripping arrangement (130),
- (C) transferring the leading end (201) of the cable-like material to the winding-container gripper (154),
- (D) winding the cable-like conductor material (200) on the winding arrangement (150),
- (E) transferring the trailing end (202) of the cable-like conductor material (200) to the first gripping arrangement (130),
- (F) cutting the cable-like conductor material (200) to length,
- (H) transferring the leading end (201) of the cable-like conductor material to the second gripping arrangement (140),
- (I) evening out the two ends (201, 202) of the cable-like conductor material (200) by aligning the first gripper arrangement (130) with the second gripper arrangement (140),
- (J) relieving the coil on the winding arrangement (150, 152) of stressing.

8. The process as claimed in claim 7, which comprises the additional step of rotating the winding container into a coil-removal position following the stressing-relief step (J).

9. The process as claimed in claim 7 or 8, which comprises the additional step, following the step (F) of cutting the cable-like conductor material (200) to length, of rotating the winding container (152) until the winding-container gripper (154) assumes a transfer position in relation to the second gripper arrangement (140).

10. The process as claimed in one of claims 7 to 9, wherein the first gripper arrangement (130), for a certain part of the travel path, is moved out of the longitudinal direction in order to avoid interfering with the winding-container gripper (154), and is moved into the original line of travel again once the first gripper arrangement (130) has passed the winding-container gripper (154).

## Revendications

1. Dispositif (100) pour enrouler un matériau en forme de câble (200), comprenant :
- un dispositif d'enroulement (150), sur lequel le matériau en forme de câble peut être enroulé,
- un premier dispositif de préhension (130) pour l'avance linéaire de l'extrémité avant du matériau en forme de câble (200) et pour le transfert au dispositif d'enroulement (150), **caractérisé en ce qu'**un deuxième dispositif de préhension (140) est prévu, pour le transfert de ladite extrémité avant du matériau en forme de câble depuis le dispositif d'enroulement (150) et pour le déplacement linéaire de cette extrémité avant à l'écart du dispositif d'enroulement (150),
- ledit premier dispositif de préhension (130) étant disposé de façon à saisir l'extrémité arrière du matériau en forme de câble (200) et à égaliser une différence prédéterminée des extrémités en coopération avec le deuxième dispositif de préhension.

2. Dispositif selon la revendication 1, **caractérisé en ce que** le dispositif d'enroulement (150) présente un dispositif de préhension d'enroulement (154), qui est disposé de telle sorte que l'opération d'enroulement puisse s'effectuer avec lui sur une boîte d'enroulement (152).

3. Dispositif selon la revendication 1 ou 2, **caractérisé en ce que** le dispositif d'enroulement (150) présente des moyens (180, 182, 184, 186) avec lesquels l'enroulement peut être serré et libéré.

4. Dispositif selon la revendication 3, **caractérisé en ce que** les moyens (180, 182, 184, 186) avec lesquels l'enroulement peut être serré et libéré, présentent des moyens de fixation (180a, 182a, 184a, 186a) qui font en sorte que l'enroulement est limité vers le haut.

5. Dispositif selon l'une quelconque des revendications précédentes, **caractérisé par** un moyen de guidage (158) pour le guidage vertical de l'enroulement sur le dispositif d'enroulement (150) et pour éviter les perturbations de l'enroulement par le dispositif de préhension (154) de la boîte d'enroulement.

6. Dispositif selon l'une quelconque des revendications précédentes, **caractérisé en ce que** la région supérieure du dispositif d'enroulement (150) présente deux évidements opposés (190, 192) pour le ficelage et le transport ultérieur de la bobine enroulée.

7. Procédé pour enrouler un matériau conducteur en forme de câble (200), comprenant :
- un dispositif d'enroulement (150), sur lequel le matériau conducteur en forme de câble peut être enroulé, avec un dispositif de préhension (154) de la boîte d'enroulement,
- un premier dispositif de préhension (130) pour l'avance linéaire de l'extrémité avant (201) du matériau conducteur en forme de câble (200) et pour le transfert au dispositif d'enroulement (150),
- un deuxième dispositif de préhension (140) pour le transfert de ladite extrémité avant (201) du matériau conducteur en forme de câble depuis le dispositif d'enroulement (150) et pour le déplacement linéaire de cette extrémité avant à l'écart du dispositif d'enroulement (150), comprenant les étapes consistant à :
- (A) transférer l'extrémité avant (201) du matériau en forme de câble au premier dispositif de préhension (130),
- (B) avancer l'extrémité avant (201) du matériau conducteur (200) en forme de câble et la guider à travers le premier dispositif de préhension (130),
- (C) transférer l'extrémité avant (201) du matériau en forme de câble au dispositif de préhension (154) de la boîte d'enroulement ;
- (D) enrouler le matériau conducteur (200) en forme de câble sur le dispositif d'enroulement (150),
- (E) transférer l'extrémité arrière (202) du matériau conducteur (200) en forme de câble au premier dispositif de préhension (130),
- (F) sectionner en longueur le matériau conducteur (200) en forme de câble,
- (H) transférer l'extrémité avant (201) du matériau conducteur en forme de câble au deuxième dispositif de préhension (140),
- (I) égaliser les deux extrémités (201, 202) du matériau conducteur (200) en forme de câble par un alignement du premier dispositif de préhension (130) avec le deuxième dispositif de préhension (140),
- (J) détendre l'enroulement sur le dispositif d'enroulement (150, 152).

8. Procédé selon la revendication 7, **caractérisé par** l'étape supplémentaire consistant à faire tourner la boîte d'enroulement après la détente (J) dans une position d'enlèvement de l'enroulement.

9. Procédé selon la revendication 7 ou 8, **caractérisé par** l'étape supplémentaire, après le sectionnement (F) du matériau conducteur (200) en forme de câble, consistant à faire tourner la boîte d'enroulement (152), jusqu'à ce que le dispositif de préhension (154) de la boîte d'enroulement adopte une position de transfert vers le deuxième dispositif de préhension (140).

10. Procédé selon l'une quelconque des revendications 7 à 9, **caractérisé en ce que** le premier dispositif de préhension (130) est déplacé vers l'extérieur hors de la direction longitudinale pour une partie déterminée de la course de déplacement, afin d'éviter une interférence néfaste avec le dispositif de préhension (154) de la boîte d'enroulement et est à nouveau rentré dans la ligne de déplacement d'origine après que le premier dispositif de préhension (130) a passé le dispositif de préhension (154) de la boîte d'enroulement.
